# EUROPÄISCHE PATENTSCHRIFT

(11) **EP 2 060 416 B1**
(45) Veröffentlichungstag und Bekanntmachung des Hinweises auf die Patenterteilung: **16.10.2013**
(21) Anmeldenummer: 08014418.1
(22) Anmeldetag: 13.08.2008
(51) Int. Cl.: B60G 3/26, B62D 17/00

(54) **Verstellvorrichtung für Radaufhängungen**
Adjustment device for wheel suspensions
Dispositif de réglage pour suspensions de roues

(30) Priorität: 16.11.2007 DE 102007054823
(43) Veröffentlichungstag der Anmeldung: 20.05.2009
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- WO-A-2005/005177
- DE-A1- 3 928 135
- DE-A1- 19 836 440
- DE-A1-102005 025 039
- FR-A- 2 833 233
- US-A1- 2002 036 385

## Beschreibung

Die Erfindung betrifft eine Verstellvorrichtung für Radaufhängungen von Kraftfahrzeugen gemäß dem Oberbegriff des Patentanspruches 1.

Eine aktive Hinterachslenkung eines Kraftfahrzeugs erfolgt bekanntermaßen mittels hydraulischer oder rein elektrischer Systeme. Hierzu verstellen Aktuatoren in erster Linie die Spurstange, d. h. die Länge der Spurstange wird verändert oder deren Fußpunkt verschoben. Je nach Ausführung wird Vorspur oder Sturz bzw. beide kinematischen Kenngrößen gleichzeitig oder abwechselnd je nach Erfordernis verstellt.

Eine Verstellvorrichtung zeigt z. B. die DE 198 36 440 A1, bei der die Radführungselemente wie Querlenker, etc. nicht unmittelbar an dem Radträger, sondern an einer Basisplatte angelenkt sind. Die Basisplatte wiederum trägt den Radträger, der schwenkbar um eine etwa horizontal ausgerichtete Schwenkachse angeordnet ist. Mittels eines außerhalb der Schwenkachse angreifenden Aktuators kann somit der Radsturz unabhängig von der vorgegebenen Kinematik der Radaufhängung schnell und präzise auf definierte Fahrsituationen des Kraftfahrzeuges eingestellt werden.

Aus der US 2002/036385 A1 ist eine solche gattungsgemäße Verstellvorrichtung bekannt, die einen Aktuator aufweist, der auf einen, zwischen der Basisplatte und dem Radträger angeordneten Zwischenträger wirkt. An diesem Zwischenträger ist der Radträger um eine, die erste Schwenkachse kreuzende, zweite Schwenkachse gelagert.

Aufgabe der Erfindung ist es, eine Verstellvorrichtung der gattungsgemäßen Art vorzuschlagen, mittels der in baulich günstiger Weise eine noch weitergehende Verstellung radführungsspezifischer Parameter der Radaufhängung erzielbar ist.

Diese Aufgabe wird erfindungsgemäß mit den Merkmalen des Patentanspruches 1 gelöst. Vorteilhafte Weiterbildungen der Erfindung beschreiben die Unteransprüche.

Erfindungsgemäß wird vorgeschlagen, dass der Aktuator auf einen zwischen der Basisplatte und dem Radträger angeordneten Zwischenträger wirkt, an dem der Radträger um eine die erste Schwenkachse kreuzende, zweite Schwenkachse gelagert ist. Ein zweiter Aktuator kann an dem Zwischenträger befestigt sein, der außerhalb der zweiten Schwenkachse an dem Radträger angreift. Faktisch bedeutet dies, dass der Radträger über den Zwischenträger kardanisch mit der Basisplatte verbunden ist und somit über zwei Schwenkachsen mit entsprechenden Freiheitsgraden über zwei Aktuatoren einfach und präzise verstellbar ist.

Erfindungsgemäß wird somit eine kardanische Aufhängung für einen Hinterachsradträger auf einer Basisplatte vorgeschlagen, bei der der Radträger mittels zweier Aktuatoren in Vorspur und Sturz sowohl einzeln als auch gleichzeitig verstellbar ist. Das ursprüngliche Achsprinzip bleibt dabei erhalten. Ausgehend von einer nicht aktiven Hinterachse wird lediglich ein nicht lenkbarer Radträger durch Basisplatte und darauf befindlichem Schwenkmechanismus ersetzt. Der Bremssattel kann dann auf den nunmehr schwenkbaren Radträger sitzen. Das Bremsmoment wird über die Kardangelenke übertragen. Die Schwenkbewegung selbst findet dabei sowohl in Vorspur als auch Sturz exakt durch den Radmittelpunkt statt, d. h. dem Durchstoßpunkt der Raddrehachse durch die Radmittelebene. Erfindungsgemäß werden dabei die Gummi-Metall-Lager durch zusätzlich überlagerte Lenkbewegungen des Rades nicht verzwengt. Das Bremsmoment wird statisch bestimmt über die Kardangelenke übertragen.

Dabei kann die erste Schwenkachse zur Verstellung des Radsturzes im Wesentlichen horizontal und die zweite Schwenkachse zur Verstellung des Lenkwinkels des Rades im Wesentlichen senkrecht ausgerichtet sein. Die Zuordnung der Schwenkachsen kann aber auch umgekehrt sein. Neben einer Verstellung des Radsturzes kann somit auch z. B. zur Herstellung einer Vierrad-Lenkung des Kraftfahrzeuges oder zu fahrdynamisch geregelten Lenkbewegungen der Hinterräder der Lenkwinkel der Räder gleichsinnig und/oder gegensinnig und/oder einseitig gesteuert werden.

Um die Radeinstellungen (Sturz, Lenkwinkel) weitgehendst unabhängig voneinander verstellen zu können wird vorgeschlagen, dass die im Wesentlichen horizontale und/oder die im wesentlichen senkrechte Schwenkachse des Radträgers und des Zwischenträgers jeweils durch einen in der Raddrehachse liegenden Radmittelpunkt verläuft.

Erfindungsgemäß ist zumindest der an der Basisplatte befestigte Aktuator elektrisch angetrieben und treibt dieser über einen selbsthemmenden Stelltrieb auf einen Exzenter ab, der in eine Kulissenführung des Zwischenträgers und des Radträgers eingreift. Derartige Aktuatoren benötigen wenig Einbauraum und sind schnell und präzise ansteuerbar.

Baulich besonders günstig können beide Aktuatoren innerhalb der Radschüssel des Rades positioniert sein. Dabei kann bevorzugt der etwa zylindrische Aktuator zur Verstellung des Radsturzes oberhalb der horizontalen Schwenkachse und im Wesentlichen parallel zu dieser und der etwa zylindrische Aktuator zur Verstellung des Lenkwinkels des Rades unterhalb der horizontalen Schwenkachse und im Wesentlichen parallel oder schräg zur senkrechten Schwenkachse ausgerichtet sein.

Baulich und fertigungstechnisch günstig können zur Bildung der horizontalen Schwenkachse an die Basisplatte Lagerkonsolen angeformt sein, in die am Zwischenträger angeordnete Lagerbolzen mittel- oder unmittelbar einragen. Desgleichen können zur Bildung der senkrechten Schwenkachse an den Zwischenträger Lagerkonsolen angeformt oder Lagerbohrungen eingearbeitet sein, in die am Radträger angeordnete Lagerbolzen mittel- oder unmittelbar einragen.

Zur Erzielung einer einfachen Montage der Verstellvorrichtung kann zumindest ein Lagerbolzen ein Einschraubbolzen sein, der einen Gewindeabschnitt und einen Lagerabschnitt aufweist und der durch eine Lagerkonsole hindurch in ein Innengewinde des Zwischenträgers oder des Radträgers fest einschraubbar ist. Eine spielfreie und robuste Lagerung wird dabei erzielt, wenn zwischen dem Lagerabschnitt des Einschraubbolzens und der Befestigungskonsole jeweils eine Führungsbüchse, eine Lagerbüchse und in axialer Richtung ein Anlaufring vorgesehen sind. Eine derartige Ausbildung der Lagerstellen zwischen dem Radträger, dem Zwischenträger und ggf. der Basisplatte ermöglicht auch den Einsatz gewichtsgünstiger Werkstoffe, z. B. Aluminiumlegierungen.

In baulich gedrängter Anordnung kann eine die senkrechte Schwenkachse bildende Lagerkonsole zugleich die Kulissenführung für den Exzenter des betreffenden Aktuators tragen. Damit werden zudem von dem Rad und dem Radträger ausgehende Kräfte und Momente (z. B. Bremsmomente, ggf. Antriebsmomente, etc.) günstig in die Radaufhängung eingeleitet.

Desweiteren kann die Kulissenführung für den den Lenkwinkel verstellenden Aktuator am Radträger in einer die senkrechte Schwenkachse einschließenden Querebene und nach außen beabstandet zu dieser Schwenkachse am Radträger ausgebildet sein. Dies stellt bei robuster Abstützung von Störkräften am Rad und einer baulich besonders gedrängten Anordnung einen ausreichenden und wirksam angreifenden Lenkhebel sicher, über den der Aktuator den Radträger über die Kulissenführung verstellen kann.

Schließlich kann die Radaufhängung in an sich bekannter Weise einen oberen und einen unteren Querlenker und einen außerhalb der durch die Kugelgelenke der Querlenker an der Basisplatte gebildeten Lenkachse angeordneten, spur-beeinflussenden Lenker aufweisen, wobei die Aktuatoren jeweils in Nähe der Kugelgelenke des oberen und unteren Querlenkers an der Basisplatte bzw. dem Zwischenträger angeordnet sind. Damit gelingt es, die Verstellmomente der Aktuatoren und die Radführungskräfte und -momente zuverlässig und präzise in die Radaufhängung einzuleiten. Die kinematisch durch den spurbeeinflussenden Lenker der Radaufhängung vorgegebene Spurverstellung kann durch entsprechende Ansteuerung des entsprechenden Aktuators nach fahrdynamisch definierten Parametern oder zur Erzielung einer Vierradlenkung des Kraftfahrzeuges entsprechend überlagert werden.

Ein Ausführungsbeispiel der Erfindung ist im Folgenden mit weiteren Einzelheiten näher erläutert. Die schematische Zeichnung zeigt in:
- **Fig. 1**: in raumbildlicher Darstellung eine Verstellvorrichtung zum Verstellen des Radsturzes und des Lenkwinkels einer Rades einer Radaufhängung für Kraftfahrzeuge, mit einem über einen Zwischenträger an einer Basisplatte kardanisch gelagerten Radträger und VerstellAktuatoren, in einer Ansicht in Fahrtrichtung F des Kraftfahrzeuges;
- **Fig. 2**: einen Querschnitt entlang der senkrechten Schwenkachse durch den Radträger, den Zwischenträger und die Basisplatte, gemäß Linie II - II der Fig. 1;
- **Fig. 2a**: in einer Detailansicht des in einer Kulissenführung angeordneten Exzenters eines Aktuators;
- **Fig. 3**: einen Viertelschnitt entlang der Linie III - III der Fig. 2 durch den Radträger, den Zwischenträger und die Basisplatte;
- **Fig. 4**: eine raumbildliche Ansicht der Verstellvorrichtung gemäß den Fig. 1 bis 3 von vorne, entgegen der Fahrtrichtung F;
- **Fig. 5**: einen Schnitt gemäß Linie V - V der Fig. 4 mit dem in einer Kulissenführung des Radträgers angreifenden Exzenter des Aktuators zur Verstellung des Lenkwinkels des Rades;
- **Fig. 6**: einen durch die Raddrehachse gelegten Querschnitt durch die Verstellvorrichtung und das im Radträger drehbar gelagerte Rad mit Felgenschüssel; und
- **Fig. 7**: einen Schnitt z.B. entlang der Linie VII - VII der Fig. 3 durch eine alternative Ausgestaltung einer Lagerstelle der horizontalen oder senkrechten Schwenkachse des Radträgers bzw. des Zwischenträgers der Stellvorrichtung.

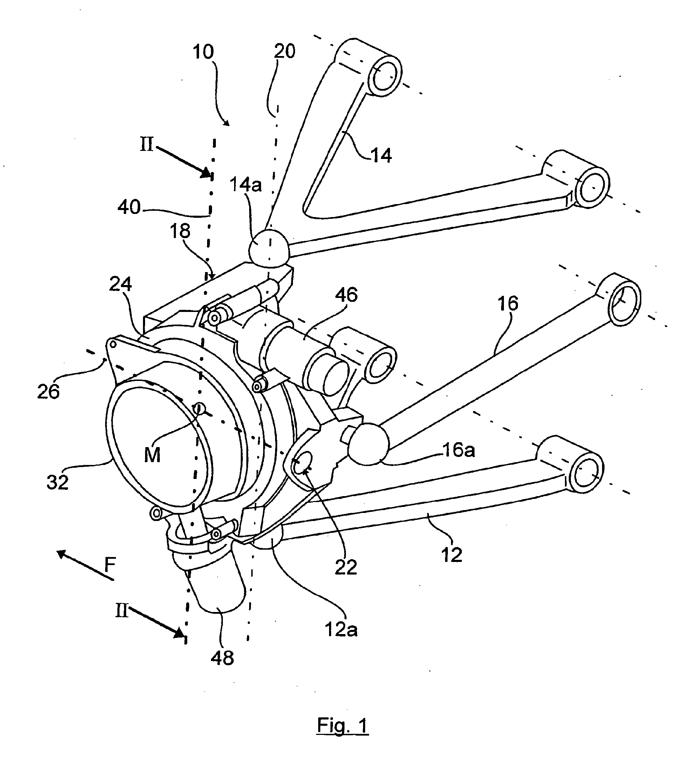

In der **Fig. 1** ist beispielhaft eine herkömmliche Doppelquerlenkerachse mit einer linksseitigen Radaufhängung 10 für die hinteren Räder eines Kraftfahrzeuges dargestellt, mit einem unteren Querlenker 12, einem oberen Querlenker 14 und einem spurbeeinflussenden Lenker 16 als Radführungselemente, die einerseits an dem nicht dargestellten Aufbau des Kraftfahrzeuges und andererseits über Kugelgelenke 12a, 14a, 16a an einer Basisplatte 18 schwenkbar angelenkt sind. Anstelle der gezeigten Doppelquerlenkerachse ist die Erfindung auch mit jedem anderen Achsprinzip kombinierbar.

Die Kugelgelenke 12a, 14a der Querlenker 12, 14 definieren eine Lenkachse 20, während der Lenker 16 durch seine räumliche Anordnung und die außerhalb der Lenkachse 20 liegende Anlenkung an der Basisplatte 18 ähnlich einer Lenkspurstange wirkt. Federung und Dämpfung der Radaufhängung 10 sind der besseren Übersichtlichkeit wegen nicht dargestellt.

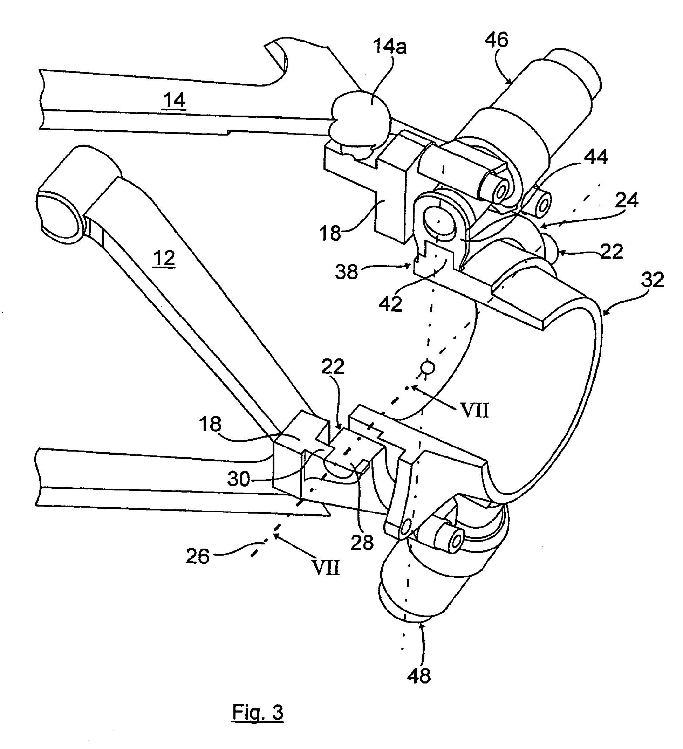

Die Basisplatte 18 trägt über zwei Lagerstellen 22 (vgl. auch **Fig. 3**) einen im Wesentlichen ringförmigen Zwischenträger 24, der um eine im Wesentlichen horizontale Schwenkachse 26 schwenkbar ist. Die Lagerstellen 22 sind jeweils gebildet durch einen an den Zwischenträger 24 angeformten, radial abragenden Lagerbolzen 28, der in einer korrespondierenden Lagerkonsole 30 der Basisplatte 18 geführt ist.

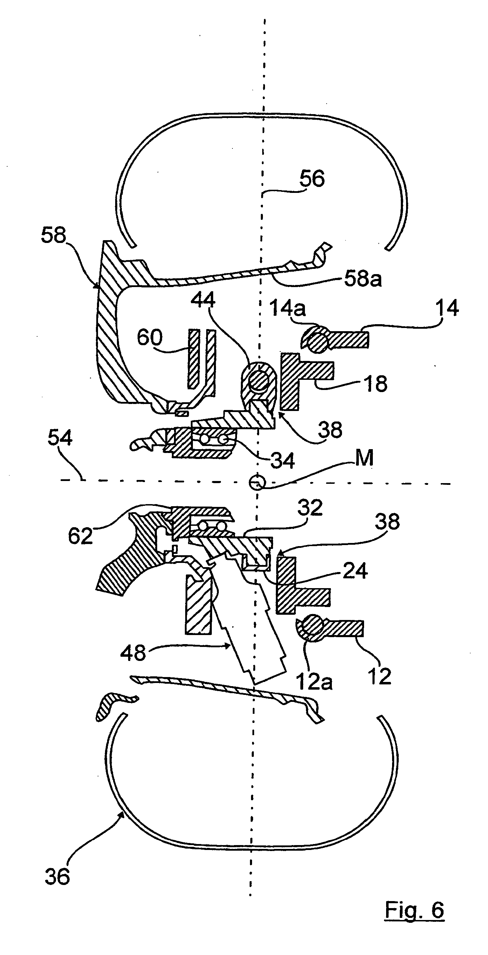

Der Zwischenträger 24 wiederum trägt den eigentlichen, nabenförmigen Radträger 32, in dem über Radlager 34 (**Fig. 6**) das Rad 36 drehbar gelagert ist.

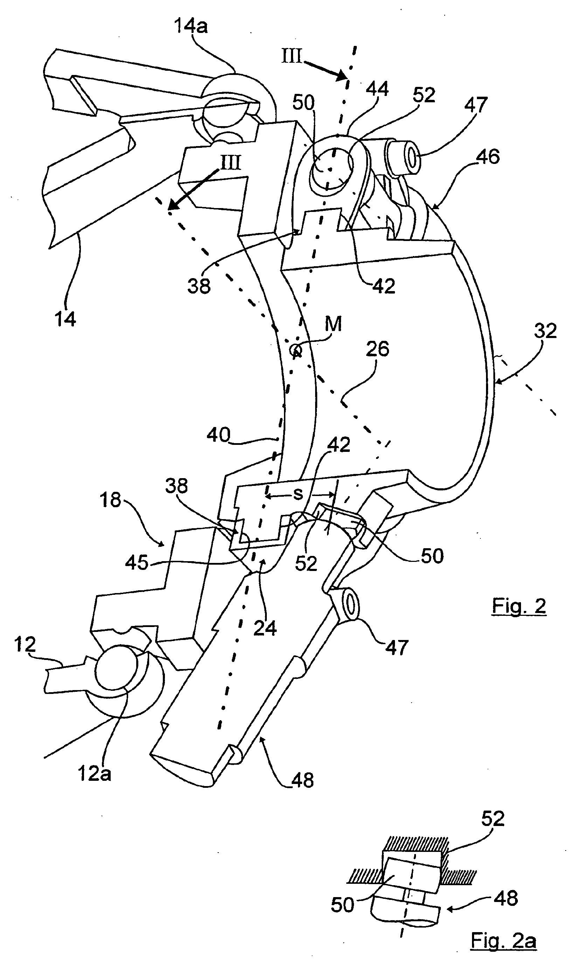

Der Radträger 32 ist an dem Zwischenträger 24 (vgl. insbesondere **Fig. 2**) über Lagerstellen 38 schwenkbar angelenkt, wobei die Lagerstellen 38 eine etwa vertikal verlaufende, zweite Schwenkachse 40 bilden. Die Lagerstellen 38 setzen sich aus an den Radträger 32 angeformten Lagerbolzen 42 und am Zwischenträger 24 ausgebildeten Lagerkonsolen 44 (oben) oder direkt in den Zwischenträger 24 eingearbeiteten Lagerbohrungen 45 (unten) zusammen.

Die horizontale Schwenkachse 26 und die vertikale Schwenkachse 40 definieren - durch die Lagerstellen 22, 38 verlaufend - jeweils den Radmittelpunkt M bzw. den Durchstoßpunkt der Raddrehachse 54 durch die Radmittelebene 56 (**Fig. 6**).

Durch die beiden Schwenkachsen 26, 40 ist der Radträger 32 faktisch kardanisch schwenkbar mit der Basisplatte 18 verbunden, so dass sowohl der Radsturz (um die Schwenkachse 26) als auch der Lenkwinkel (um die Schwenkachse 40) des Rades 36 verstellbar sind.

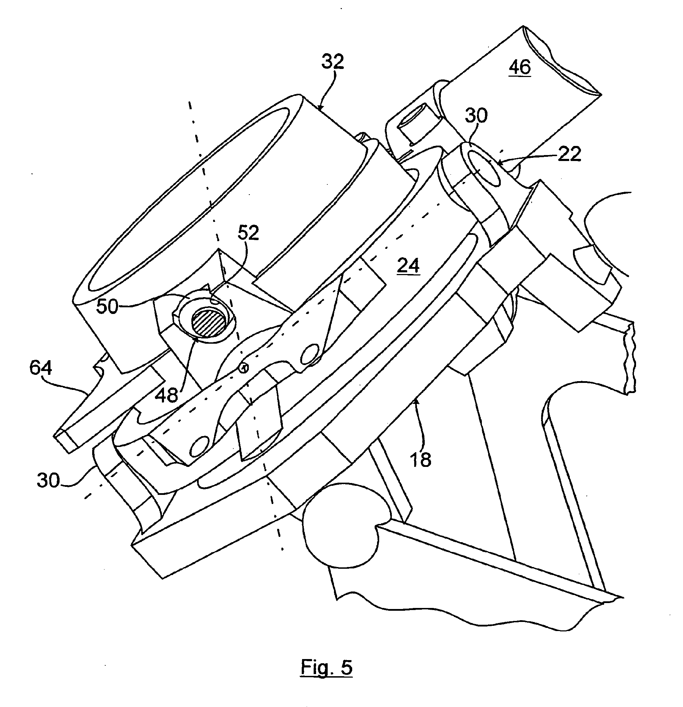

Zur Verstellung sind zwei etwa zylindrische Aktuatoren 46, 48 vorgesehen, die sich in nicht dargestellter Weise aus einem Elektromotor und einem selbsthemmenden Stelltrieb zusammensetzen. Der Stelltrieb, z. B. ein hochübersetztes Planetenradgetriebe oder ein Harmonicdrive, treibt jeweils einen Exzenter 50 an, der in eine schlitzförmige oder langlochförmige Kulissenführung 52 (vgl. **Fig. 2** und **Fig. 5**) eingreift.

Dabei ist die Kulissenführung 52 für den Aktuator 46 in die Lagerkonsole 44 des Zwischenträgers 24 und die Kulissenführung 52 für den Aktuator 48 unmittelbar in den Radträger 32 eingearbeitet.

Der Aktuator 46 für die Verstellung des Radsturzes des Rades 36 ist mittels mehrerer Schrauben 47 an der Basisplatte 18 oberhalb der horizontalen Schwenkachse 26 und parallel zu dieser befestigt; die Drehachse des Exzenters 50 verläuft ebenfalls etwa horizontal und liegt wie aus **Fig. 2** ersichtlich ist außerhalb der Schwenkachse 26, während die langlochförmige Kulissenführung 52 senkrecht dazu verläuft. Durch Ansteuern des Aktuators 46 kann somit der Zwischenträger 24 mit dem Radträger 32 um die horizontale Schwenkachse 26 verstellt werden.

Der Aktuator 48 ist unterhalb der Schwenkachse 26 am Zwischenträger 24 mittels mehrerer Schrauben 47 befestigt, wobei der zylindrische Aktuator 48 nach unten und schräg nach innen zur vertikalen Schwenkachse 40 angeordnet ist. Der Exzenter 50 ragt in die schlitzförmige Kulissenführung 52 in einer Querebene durch die vertikale Schwenkachse 40 betrachtet außerhalb der unteren Lagerstelle 38 (**Fig. 2** **und** **5**) und der Schwenkachse 40 unter Bildung eines wirksamen Lenkhebels s ein; die Führungsflächen der Kulissenführung 52 sind so ausgerichtet, dass bei einer Verdrehung des Exzenters 50 der Radträger 32 um die vertikale Schwenkachse 40 zur Einstellung eines Lenkwinkels des Rades 36 verschwenkt wird.

Im Gegensatz zu der weiter oben beschriebenen parallelen Ausrichtung der Exzenter-Drehachse des Aktuators 46 zu der horizontalen Schwenkachse 26 ist die Exzenter-Drehachse des Aktuators 48 nicht parallel zur vertikalen Schwenkachse 40 ausgerichtet. Bei einer Schwenkbewegung des Radträgers 32 um die vertikale Schwenkachse 40 stellen sich daher die Kulissenflächen 52 schräg zur Ebene, welche durch beide Achsen 26, 40 gebildet wird. Um bei dieser Schwenkbewegung des Radträgers 32 um die Achse 40 Kantenträger zu vermeiden, ist die Exzenterfläche des Exzenters 50 nach außen gewölbt bzw. ballig ausgeführt, wie es in der Detailansicht der Fig. 2a dargestellt ist. Für den Fall, dass auch die Exzenter-Drehachse des Aktuators 46 nicht parallel zur horizontalen Schwenkachse 26 ausgerichtet ist, würden auch hier ballig ausgeführte Exzenterflächen notwendig sein.

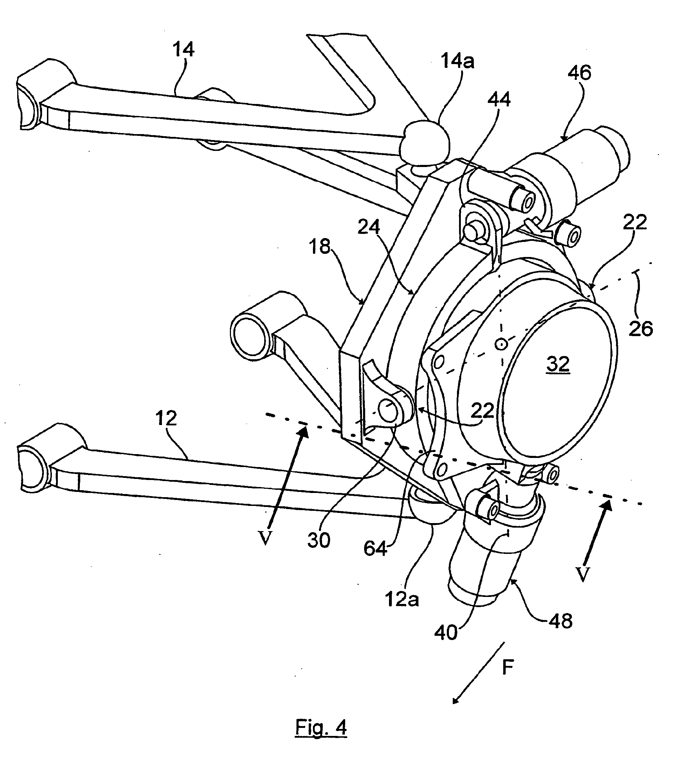

Wie die **Fig. 6** zeigt, sind die beiden Aktuatoren 46, 48 zudem innerhalb der Felgenschüssel 58a der Radfelge 58 des Rades 36 positioniert. In der Schnittansicht ist der Aktuator 46 allerdings nicht ersichtlich. Das Rad 36 ist über die Felge 58 und eine Bremsscheibe 60 mit dem Radflansch 62 fest verbunden. Der nicht ersichtliche Bremssattel der Scheibenbremse ist an einem radial abragenden Flansch 64 (vgl. **Fig. 4**) des Radträgers 32 befestigt.

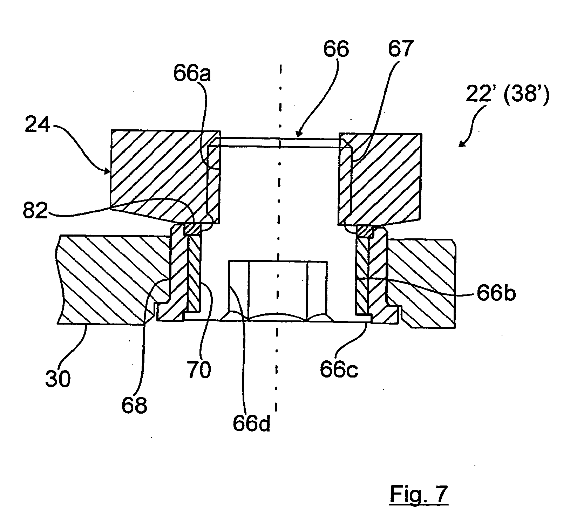

In der **Fig. 7** schließlich ist eine alternative Lagerstelle 22' oder 38' zur Bildung der Schwenkachsen 26 oder 40 dargestellt, bei der der jeweilige Lagerbolzen durch einen Einschraubbolzen 66 gebildet ist.

Der rotationssymmetrische Einschraubbolzen 66 trägt einen Gewindeabschnitt 66a und einen im Durchmesser größeren Lagerabschnitt 66b, der z. B. durch die Lagerkonsole 30 der Basisplatte 18 hindurch in den ringförmigen Zwischenträger 24 in eine dort eingeschnittene Gewindebohrung 67 von außen nach innen eingeschraubt ist.

Dabei sind zwischen dem Lagerabschnitt 66b des Einschraubbolzens 66 und der Befestigungskonsole 30 jeweils eine Führungsbuchse 68, eine Lagerbuchse 70 und in axialer Richtung ein Anlaufring 72 vorgesehen, die wie dargestellt über einen Ringbund 66c des Einschraubbolzens 66 gehalten sind.

Ferner sind in dem Einschraubbolzen 66 Schlüsselflächen 66d zum Ansetzen eines Eindrehwerkzeuges vorgesehen.

Die Lagerstellen 22', 38' ermöglichen neben der einfachen Montage auch die Verwendung gewichtsgünstiger Werkstoffe für zumindest die Basisplatte 18, ggf. aber auch für den Zwischenträger 24 und den Radträger 32, da aufgrund der eingesetzten Führungsbuchse 68 aus Stahl unzulässig hohe Spannungen im Bereich der Lagerstellen 22', 38' vermieden sind.

## Patentansprüche

1. Verstellvorrichtung für Radaufhängungen von Kraftfahrzeugen, mit einer zwischen Radführungselementen (12, 14, 16) und einem Radträger (32) angeordneten Basisplatte (18), an der die Radführungselemente (12, 14, 16) angelenkt sind und an der der Radträger (32) um eine eine Radstellung definierende erste Schwenkachse (26) gelagert ist, sowie mit einem Aktuator (46), der an der Basisplatte (18) befestigt ist und außerhalb der Schwenkachse (26) angreift, wobei der Aktuator (46) auf einen zwischen der Basisplatte (18) und dem Radträger (32) angeordneten Zwischenträger (24) wirkt, an dem der Radträger (32) um eine die erste Schwenkachse (26) kreuzende, zweite Schwenkachse (40) gelagert ist, **dadurch gekennzeichnet, dass** der Aktuator (46) über einen selbsthemmenden Stelltrieb auf einen Exzenter (50) abtreibt, der in eine Kulissenführung (52) des Zwischenträgers (24) eingreift, und dass eine die Schwenkachse (26) über die Lagerstelle (38) bildende Lagerkonsole (44) zugleich die Kulissenführung (52) für den Exzenter (50) des Aktuators (46) trägt.

2. Verstellvorrichtung nach Anspruch 1, **dadurch gekennzeichnet, dass** ein zweiter Aktuator (48) an dem Zwischenträger (24) befestigt ist, der außerhalb der zweiten Schwenkachse (40) an dem Radträger (32) angreift.

3. Verstellvorrichtung nach Anspruch 1 oder 2, **dadurch gekennzeichnet, dass** die erste Schwenkachse (26) zur Verstellung des Radsturzes im Wesentlichen horizontal und die zweite Schwenkachse (40) zur Verstellung des Lenkwinkels des Rades (36) im Wesentlichen senkrecht ausgerichtet ist.

4. Verstellvorrichtung nach Anspruch 3, **dadurch gekennzeichnet, dass** die im Wesentlichen horizontale und/oder die im Wesentlichen senkrechte Schwenkachse (26, 40) jeweils durch einen in der Raddrehachse (54) liegenden Radmittelpunkt (M) verläuft.

5. Verstellvorrichtung nach einem der Ansprüche 3 bis 4, **dadurch gekennzeichnet, dass** der erste und/oder zweite Aktuator (46, 48) innerhalb der Radschüssel (58a) des Rades (36) positioniert ist/sind.

6. Verstellvorrichtung nach einem der Ansprüche 3 bis 5, **dadurch gekennzeichnet, dass** der etwa zylindrische erste Aktuator (46) zur Verstellung des Radsturzes oberhalb der horizontalen, ersten Schwenkachse (26) und im Wesentlichen parallel zu dieser angeordnet ist.

7. Verstellvorrichtung nach Anspruch 2 und einem der Ansprüche 3 bis 6, **dadurch gekennzeichnet, dass** der etwa zylindrische zweite Aktuator (48) zur Verstellung des Lenkwinkels des Rades (36) unterhalb der horizontalen Schwenkachse (26) und im wesentlichen parallel oder schräg zur senkrechten Schwenkachse (40) ausgerichtet ist.

8. Verstellvorrichtung nach einem der Ansprüche 3 bis 7, **dadurch gekennzeichnet, dass** zur Bildung der horizontalen, ersten Schwenkachse (26) an die Basisplatte (18) Lagerkonsolen (30) angeformt sind, in die am Zwischenträger (24) angeordnete Lagerbolzen (28; 66) mittel- oder unmittelbar einragen.

9. Verstellvorrichtung nach einem der Ansprüche 3 bis 8, **dadurch gekennzeichnet, dass** zur Bildung der senkrechten, zweiten Schwenkachse (40) an den Zwischenträger (24) Lagerkonsolen (44) angeformt sind, in die am Radträger (32) angeordnete Lagerbolzen (42; 66) mittel- oder unmittelbar einragen.

10. Verstellvorrichtung nach Anspruch 8 oder 9, **dadurch gekennzeichnet, dass** zumindest ein Lagerbolzen ein Einschraubbolzen (66) ist, der einen Gewindeabschnitt (66a) und einen Lagerabschnitt (66b) aufweist und der durch eine Lagerkonsole (30, 44) hindurch in eine Gewindebohrung (67) des Zwischenträgers (24) oder des Radträgers (32) fest einschraubbar ist.

11. Verstellvorrichtung nach Anspruch 10, **dadurch gekennzeichnet, dass** zwischen dem Lagerabschnitt (66b) des Einschraubbolzens (66) und der Befestigungskonsole (30, 44) jeweils eine Führungsbuchse (68), eine Lagerbuchse (70) und in axialer Richtung ein Anlaufring (82) vorgesehen sind.

12. Verstellvorrichtung nach einem der 3-11 Ansprüche, **dadurch gekennzeichnet, dass** die Kulissenführung (52) für den den Lenkwinkel verstellenden Aktuator (48) am Radträger (32) in einer die senkrechte Schwenkachse (40) einschließenden Querebene und nach außen beabstandet zu dieser Schwenkachse (40) am Radträger (32) ausgebildet ist.

13. Verstellvorrichtung nach einem der Ansprüche 2 bis 12, **dadurch gekennzeichnet, dass** die Radaufhängung (10) einen unteren und einen oberen Querlenker (12, 14) und einen außerhalb der durch die Kugelgelenke (12a, 14a) der Querlenker (12, 14) an der Basisplatte (18) gebildeten Lenkachse (20) angeordneten spurbeeinflussenden Lenker (16) aufweist und dass die Aktuatoren (46, 48) jeweils in Nähe der Kugelgelenke (12a, 14a) des oberen und unteren Querlenkers (12, 14) an der Basisplatte (18) angeordnet sind.

## Claims

1. Adjustment device for wheel suspensions of motor vehicles, comprising a base plate (18) which is arranged between wheel guide elements (12, 14, 16) and a wheel carrier (32) and to which the wheel guide elements (12, 14, 16) are articulated and on which the wheel carrier (32) is mounted about a first pivot axis (26) defining a wheel position, and comprising an actuator (46) which is fastened to the base plate (18) and acts outside the pivot axis (26), the actuator (46) acting on an intermediate carrier (24) arranged between the base plate (18) and the wheel carrier (32), on which intermediate carrier the wheel carrier (32) is mounted about a second pivot axis (40) intersecting the first pivot axis (26), **characterised in that** the actuator (46) drives via a self-locking actuating drive a cam (50) which engages in a connecting link guide (52) of the intermediate carrier (24), and **in that** a bearing bracket (44) forming the pivot axis (26) via the bearing point (38) simultaneously carries the connecting link guide (52) for the cam (50) of the actuator (46).

2. Adjustment device according to claim 1, **characterised in that** a second actuator (48) is fastened to the intermediate carrier (24) and acts, outside the second pivot axis (40), on the wheel carrier (32).

3. Adjustment device according to claim 2, **characterised in that**, the first pivot axis (26) for adjusting the wheel camber is oriented substantially horizontally and the second pivot axis (40) for adjusting the steering angle of the wheel (36) is oriented substantially vertically.

4. Adjustment device according to claim 3, **characterised in that** the substantially horizontal and/or the substantially vertical pivot axis (26, 40) extends in each case through a wheel centre (M) in the wheel rotational axis (54).

5. Adjustment device according to either claim 3 or claim 4, **characterised in that** the first and/or second actuator (46, 48) is/are positioned within the wheel disc (58a) of the wheel (36).

6. Adjustment device according to any of claims 3 to 5, **characterised in that** the approximately cylindrical first actuator (46) for adjusting the wheel camber is arranged above and substantially parallel to the horizontal first pivot axis (26).

7. Adjustment device according to claim 2 and any of claims 3 to 6, **characterised in that** the approximately cylindrical second actuator (48) for adjusting the steering angle of the wheel (36) is arranged below the horizontal pivot axis (26) and substantially parallel or oblique to the vertical pivot axis (40).

8. Adjustment device according to any of claims 3 to 7, **characterised in that**, in order to form the horizontal first pivot axis (26), bearing brackets (30) are integrally formed on the base plate (18), into which bearing brackets bearing bolts (28; 66) arranged on the intermediate carrier (24) protrude in either an indirect or a direct manner.

9. Adjustment device according to any of claims 3 to 8, **characterised in that**, in order to form the vertical second pivot axis (40), bearing brackets (44) are integrally formed on the intermediate carrier (24), into which bearing brackets bearing bolts (42; 66) arranged on the wheel carrier (32) protrude in either an indirect or a direct manner.

10. Adjustment device according to either claim 8 or claim 9, **characterised in that** at least one bearing bolt is a screw-in bolt (66) which has a threaded portion (66a) and a bearing portion (66b) and can be rigidly screwed through a bearing bracket (30, 44) into a threaded hole (67) of the intermediate carrier (24) or of the wheel carrier (32).

11. Adjustment device according to claim 10, **characterised in that** a guide bush (68), a bearing bush (70) and, in an axial direction, a thrust ring (82) are each provided between the bearing portion (66b) of the screw-in bolt (66) and the fastening bracket (30, 44).

12. Adjustment device according to any of claims 3 to 11, **characterised in that** the connecting link guide (52) for the actuator (48), on the wheel carrier (32), adjusting the steering angle is formed on the wheel carrier (32) in a transverse plane incorporating the vertical pivot axis (40) and is outwardly spaced apart from this pivot axis (40).

13. Adjustment device according to any of claims 2 to 12, **characterised in that** the wheel suspension (10) has a lower and an upper transverse link (12, 14) and a track-influencing link (16) arranged outside the steering axis (20) formed by the ball-and-socket joints (12a, 14a) of the transverse links (12, 14) on the base plate (18), and **in that** the actuators (46, 48) are each arranged in the vicinity of the ball-and-socket joints (12a, 14a) of the upper and lower transverse links (12, 14) on the base plate (18).

## Revendications

1. Dispositif de réglage pour suspensions de roues de véhicules automobiles, comprenant une plaque de base (18) aménagée entre des éléments de guidage de roue (12, 14, 16) et un support de roue (32), sur laquelle plaque de base lesdits éléments de guidage de roue (12, 14, 16) sont articulés et sur laquelle le support de roue (32) est monté autour d'un premier axe de pivotement (26) définissant une position de roue, ainsi qu'un actionneur (46) qui est fixé à la plaque de base (18) et qui s'applique à l'extérieur de l'axe de pivotement (26), dans lequel l'actionneur (46) agit sur un support intermédiaire (24) aménagé entre la plaque de base (18) et le support de roue (32), sur lequel support intermédiaire le support de roue (32) est monté autour d'un second axe de pivotement (40) coupant le premier axe de pivotement (26), **caractérisé en ce que** l'actionneur (46) débouche, via une commande autobloquante, sur une excentrique (50), qui s'engage dans un guide de coulisse (52) du support intermédiaire (24), et **en ce qu'**une console de palier (44) formant l'axe de pivotement (26) via le point d'appui (38) porte également le gui de coulisse (52) pour l'excentrique (50) de l'actionneur (46).

2. Dispositif de réglage selon la revendication 1, **caractérisé en ce qu'**un second actionneur (48) est fixé sur le support intermédiaire (24), qui s'applique sur le support de roue (32) à l'extérieur du second axe de pivotement (40).

3. Dispositif de réglage selon la revendication 2, **caractérisé en ce que** le premier axe de pivotement (26) est aligné pour régler le déport de roue sensiblement à l'horizontale et le second axe de pivotement (40) pour régler l'angle de direction de la roue (36) sensiblement à la verticale.

4. Dispositif de réglage selon la revendication 3, **caractérisé en ce que** les axes de pivotement (26, 40) sensiblement horizontal et/ou sensiblement vertical s'étende(nt) respectivement par un point central (M) de la roue se trouvant dans l'essieu de rotation (54) des roues.

5. Dispositif de réglage selon l'une quelconque des revendications 3 à 4, **caractérisé en ce que** le premier et/ou le second actionneur (46, 48) est ou sont positionnés à l'intérieur de l'auge (58a) de la roue (36).

6. Dispositif de réglage selon l'une quelconque des revendications 3 à 5, **caractérisé en ce que** le premier actionneur (46) plus ou moins cylindrique pour le réglage de l'auge de roue est aménagé au-dessus du premier axe de pivotement horizontal (26) et sensiblement parallèlement à celui-ci.

7. Dispositif de réglage selon la revendication 2 et selon l'une quelconque des revendications 3 à 6, **caractérisé en ce que** le second actionneur (48) plus ou moins cylindrique pour le réglage de l'angle de direction de la roue (36) est aligné en dessous de l'axe de pivotement horizontal (26) et de manière sensiblement parallèle ou inclinée par rapport à l'axe de pivotement vertical (40).

8. Dispositif de réglage selon l'une quelconque des revendications 3 à 7, **caractérisé en ce que**, pour former le premier axe de pivotement horizontal (26), il est aménagé sur la plaque de base (18) des consoles d'appui (30), dans lesquelles des tourillons (28 ; 66) aménagés sur le support intermédiaire (24) font saillie directement ou indirectement.

9. Dispositif de réglage selon l'une quelconque des revendications 3 à 8, **caractérisé en ce que**, pour former le second axe de pivotement vertical (40), il est formé sur le support intermédiaire (24) des consoles d'appui (44) dans lesquelles des tourillons (42 ; 66) aménagés sur le support de roue (32) font saillie directement ou indirectement.

10. Dispositif de réglage selon la revendication 8 ou la revendication 9, **caractérisé en ce qu'**au moins un tourillon est un boulon de serrage (66), qui présente une section taraudée (66a) et une section d'appui (66b) et qui peut être solidement vissé à travers une console d'appui (30, 44) dans un alésage taraudé (67) du support intermédiaire (24) ou du support de roue (32).

11. Dispositif de réglage selon la revendication 10, **caractérisé en ce qu'**il est prévu entre la section d'appui (66b) du boulon de serrage (66) et la console de fixation (30, 44), respectivement une douille de guidage (68), une douille d'appui (70) et, dans la direction axiale, un anneau d'usure (82).

12. Dispositif de réglage selon l'une quelconque des revendications 3 à 11, **caractérisé en ce que** le guide de coulisse (52) pour l'actionneur (48) réglant l'angle de direction est formée sur le support de roue (32) dans un plan transversal comprenant l'axe de pivotement vertical (40) et distancé vers l'extérieur de cet axe de pivotement (40) sur le support de roue (32).

13. Dispositif de réglage selon l'une quelconque des revendications 2 à 12, **caractérisé en ce que** la suspension de roue (10) présente un bras transversal inférieur (12) et un bras transversal supérieur (14) et un bras (16) influençant l'écartement et agencé à l'extérieur de l'essieu directeur (20) formé par les joints à rotule (12a, 14a) des bras transversaux (12, 14) sur la plaque de base (18) et **en ce que** les actionneurs (46, 48) sont aménagés respectivement au voisinage des joints à rotule (12a, 14a) des bras transversaux supérieur et inférieur (12, 14) sur la plaque de base (18).
